Europäisches Patentamt

European Patent Office

Office européen des brevets

(11) Publication number: **0 522 234 A1**

# EUROPEAN PATENT APPLICATION

(21) Application number: **92102907.0**

(22) Date of filing: **21.02.92**

(51) Int. Cl.⁵: **C01F 17/00**, C22B 59/00,
C01B 25/225

(30) Priority: **01.07.91 SU 5000078**

(43) Date of publication of application:
**13.01.93 Bulletin 93/02**

(84) Designated Contracting States:
**DE FR GB NL**

(71) Applicant: **Gorny, Y.G.**
**ul. Tsiolkowskogo, d.20/14, kv.10**
**141700 Dolgoprudny Moscovskoy oblasti(SU)**

(72) Inventor: **Gorny, Y.G.**
**ul. Tsiolkowskogo, d.20/14, kv.10**
**141700 Dolgoprudny Moscovskoy oblasti(SU)**

(74) Representative: **Reverdin, André Pierre**
**c/o Katzarov S.A. 19, Rue des Epinettes**
**CH-1227 Genève(CH)**

(54) **Method for extracting rare-earth elements from phosphate ore.**

(57) A method for extracting rare-earth elements from phosphate ore during its processing in the production of phosphoric acid or phosphate fertilizer, consists in the fact that ground phosphate ore is mixed with phosphoric acid, which is taken in excess to form phosphate monocalium, and is decomposed upon heating until the state of liquid phase of the formed pulp close to equilibrium as regards calcium solubility, whereupon, a solid sediment containing compounds of calcium and rare-earth elements is separated from the liquid phase. Separation of the solid sediment of the pulp from the liquid phase begins from the moment when the size of the particles formed mostly by phosphate compounds of calcium reaches the value, at least, ten times exceeding the size of particles containing mostly compounds of rare-earth elements, in so doing, the solid sediment is divided into a coarsely-dispersed and finely-dispersed fractions, evolving a finely-dispersed fraction with particles formed mostly by compounds of rare-earth elements as the concentrate of rare-earth elements.

## Field of the Invention

The invention relates to processing of phosphate ores when producing mostly phosphate fertilizers and concerns a method for extracting rare-earth elements from phosphate ore.

## Prior Art

Today the majority of apatites and phosphorites are processed into phosphate fertilizer through a sulphuric acid technique (M.E.Pozin "Technology of Mineral Salts", Part II, 1974, Khimiya, Leningrad, p.801, 802, 832, 883, 885) consisting, as is known, in the extraction of phosphoric acid from phosphate ore by sulphuric acid. Phosphate ore is a complex calcium phosphate. For instance, apatite of the Kola deposit is formed mostly by complex calcium phosphate $Ca_5F(PO_4)_3$. Besides, phosphate ore comprises rare-earth elements (Rt): yttrium (Y) and lanthanides (La, Ce, Pr, Nd, Sm, Er, Tb and others) which isomorphically replace Ca in complex phosphate, and their compounds can be represented in the form of a generalized formula $Rt_{10}F_3(PO_4)_9$. The content of rare-earth elements in phosphate ore of various deposits may range from 0.1 to 8 wt.%.

Extraction is performed in a cascade of reactors using a mixture of sulphuric acid of 75 to 98 wt.% concentration and recycle phosphoric acid with a concentration from 18 to 45 wt.% of $P_2O_5$. In so doing, ground phosphate ore is introduced in the first reactor after dressing, i.e., actually apatite or phosphorite concentrate. Phosphate ore is decomposed according to the reactions:

$$Ca_5F(PO_4)_3 + 5H_2O + 7H_3PO_4 = 5Ca(H_2PO_4)_2 \cdot H_2O + HF,$$
$$Ca(H_2PO_4)_2 \cdot H_2O + H_2SO_4 + mH_2O = CaSO_4 \cdot nH_2O + 2H_3PO_4,$$
$$Ca_5F(PO_4)_3 + nH_2O + 5H_2SO_4 = 5CaSO_4 \cdot mH_2O + 3H_3PO_4 + HF.$$

Upon processing there is formed an ore solution of extraction phosphoric acid with a 28 to 45 wt.% of $P_2O_5$, which is used to produce phosphate fertilizer, and a solid sediment containing mostly calcium sulphate ($CaSO_4$), so-called phosphogypsum. From 60 to 90 % of rare-earth elements contained in phosphate ore goes over to phosphogypsum isomorphically substituting calcium (Ca) in the crystal lattice of gypsum, and from 10 to 40% of rare-earth elements goes over to the ore solution.

The presence of rare-earth elements in phosphogypsum limits the possibility of its use as a building binder, which results in its accumulation in large quantities as wastes polluting the environment.

The content of rare-earth elements in the ore solution constitutes approximately from 0.03 to 0.06 wt.%, and in phosphogypsum from 0.3 to 0.55 wt.%.

An increasing, particularly in recent time, requirement of the industry for rare-earth elements makes the problem associated with extracting rare-earth elements from phosphate ore during its processing into mineral fertilizer, all the more important and topical.

Known in the art are the methods for extracting rare-earth elements from phosphate ore during its processing. One of them (A Collection of IMGRE "Rare-Elements (Raw Materials and Economics)", Issue 8, 1973 (Moscow, B.I.Kogan, I.P.Skripka "Extraction of Rare-Earth Elements From Apatites and Phosphorites", p.4, 5) resides in extracting rare-earth elements from an ore solution (extraction phosphoric acid), lime milk ($CaCO_3$) or ammonia ($NH_3$).

However, this method has not found practical application, because a mere 50 to 75% of rare-earth elements contained in the ore solution is extracted from phosphate ore, i.e., practically not more than 30 % of their content in the original phosphate ore.

The known methods for extracting rare-earth elements from phosphogypsum by breaking it down with nitric or sulphuric acid, with subsequent deposition of phosphates of rare-earth elements from the ore solution, e.g., ammonia ($NH_3$), lime milk ($CaCO_3$) or caustic calcium [$Ca(OH)_2$] have not found practical application either due to labour intensity, many stages and appreciable expenses.

Also known in the art is a cheaper method for extracting rare-earth elements from phosphate ore during its processing (EP, A1 54993), consisting in decomposing phosphate ore by excess phosphoric acid with the provision of a solid sediment containing, at least, 70% of rare-earth elements present in the original ore.

This method for extracting rare-earth elements from phosphate ore during its processing in the production of phosphoric acid and/or phosphate fertilizer resides in mixing ground phosphate ore with phosphoric acid, which is taken in excess to form phosphate monocalcium, and is decomposed upon heating to the condition of a liquid phase of the formed pulp, close to equilibrium as to calcium solubility, whereupon, the solid sediment is separated from the liquid phase, said sediment containing the compounds of calcium and rare-earth elements.

An insoluble sediment containing phosphates of calcium (Ca) and rare-earth elements are separated from the pulp liquid phase through sedimentation settling. The congested sediment is filtered, washed with water and dried.

This insoluble sediment also contains calcium sulphates ($CaSO_4$) because in order to decompose the ore use is made of recycle extraction phosphoric acid in which there are sulphate-ions ($SO_3$) in an amount of over 5 wt.% with respect to the mass of ore, diminishing the concentration of rare-earth elements in the solid sediment. Given about 20% of sulphate-ions ($SO_3$) in the pulp with respect to the mass of ore, the concentration of rare-earth elements in the solid sediment is declined by nearly 5-fold.

In the solid sediment obtained the content of rare-earth elements accounts for 0.3 to 4 wt.% depending on their content in the original phosphate ore.

This solid sediment of rare-earth elements is further dressed or concentrated with the aid of additional production process, basically different from that for producing phosphoric acid or phosphate fertilizer.

In the course of dressing it is necessary to obtain a commercial concentrate of rare-earth elements, with the latter's content of, at least, 6 wt.% in the concentrate which is of commercial value. The higher the content of rare-earth elements in the concentrate, the higher is its cost and lower are the expenses associated with its transportation to the consumer.

However, the processing of a solid sediment to obtain a commercial concentrate of rare-earth elements in the known method of extracting rare-earth elements from phosphate ore during its working is fairly labour-consuming. It consists in a multi-step working of the solid sediment by various reagents, namely, nitric acid ($HNO_3$), ammonia ($NH_4OH$), organic extractants, e.g., a solution of tributyl phosphate in kerosene, with subsequent calcination which calls for substantial energy consumption. This concentrate contains the oxides of rare-earth elements. The content of rare-earth elements oxides in the concentrate may reach 98 wt.%.

Thereupon, the concentrate is further processed to be divided into elements. The steps of processing the solid sediment, containing the compounds of rare-earth elements, to produce the commercial concentrate of rare-earth elements with a 6 to 40 wt.% concentration of the rare-earth elements are fairly labour consuming, require additional production areas and equipment, as well as costly reagents.

In actual fact, in order to produce the commercial concentrate of rare-earth elements using the known method, it is necessary that the basic production should be supplemented with a production process different in principle from the basic one.

Disclosure of the Invention

The invention is based on the problem of developing a method for extracting rare-earth elements from phosphate ore during its processing in the production of mostly phosphate fertilizer, making it possible to provide such a solid sediment in the pulp being formed during the decomposition of ore, from which a commercial concentrate of rare-earth elements could be extracted mechanically, thus reducing expenses for its extraction.

The problem set forth is solved by the fact that in the method for extracting rare-earth elements from phosphate ore during its processing in the production of phosphoric acid and/or phosphate fertilizer, comprising mixing the ground phosphate ore with phosphoric acid, which is taken in excess to form phosphate monocalcium, and is decomposed when heated to the state of a liquid phase of the pulp formed closed to equilibrium by calcium solubility, thereupon, a solid sediment is separated from the pulp liquid phase, said sediment containing the compounds of calcium and rare-earth elements, according to the invention, separation of the pulp solid sediment from the liquid phase begins from the moment when the size of particles formed mostly by calcium phosphate compounds reaches the value, at least, exceeding ten times that of particles, containing mostly phosphate compounds of rare-earth elements, in so doing, the solid sediment is divided into a coarsely-dispersed fraction, formed mostly by calcium compounds and a finely-dispersed fraction, formed mostly by the compounds of rare-earth elements.

It is reasonable that the boundary size of particles, according to which the solid sediment is separated into a coarsely- and finely-dispersed fractions should be chosen in a range from 50 to 0.1 $\mu$m.

It is expedient that the solid sediment should be divided into a coarsely- and finely-dispersed fractions simultaneously with the separation of the solid sediment form the pulp liquid phase, first, separating the coarsely-dispersed fraction, and then, the finely-dispersed one.

Also advantageous is the division of the solid sediment into a coarsely- and finely-dispersed fractions after separating the solid sediment from the pulp liquid phase.

The coarsely-dispersed fraction particles can be separated by way of sedimentation settling.

The sediment can be also divided into coarsely- and finely-dispersed fractions with the aid of classification sieves whose cells' size corresponds to the boundary size of the particles according to which the solid sediment is divided into coarsely- and finely-dispersed fractions.

When using the recycle phosphoric acid, the content of sulfate ions ($SO_3$) in the pulp, which together with calcium (Ca) form a solid compound ($CaSO_4$), whose particles' size is commensurate with that of finely-dispersed fraction, should not exceed 10 wt.% relative to the mass of phosphoric ore.

The method, according to the invention, makes it possible to extract from the original phosphate ore of 20 to 50 wt.% of rare-earth elements in the form of a commercial concentrate with the content of rare-earth elements, at least, 6 wt.% in terms of oxides. In the concentrate obtained the rare-earth elements are contained in the form of phosphates. In so doing, the expenses to produce the commercial concentrate of rare-earth elements from phosphate ore during its processing in the production of phosphoric acid and/or phosphate fertilizer using the method according to the invention are incomparably less than those to produce the same concentrate using the known method.

The method according to the invention does not basically change the respective technical processing of phosphate ore during the production of phosphoric acid and/or phosphate fertilizer, nor does it require an increase in production areas.

Brief Description of Drawings

The invention will become apparent from a detailed description, examples and an accompanying drawing which shows a schematic of the method for extracting rare-earth elements from phosphate ore during its processing in the production of phosphoric acid, according to the invention.

Best Mode for Carrying Out the Invention

The method for extracting rare-earth elements from phosphate ore during its processing in the production of phosphoric acid and/or phosphate fertilizer resides in the following.

Pre-ground phosphate ore is known to be dressed to obtain apatite or phosphorite concentrate. In the concentrate obtained large particles of 160 $\mu$m in size account for not more than 10 wt.%.

Fed to the first reactor 1 (accompanying drawing) along line 2 is the phosphate ore concentrate, and along line 3 - phosphoric acid ($H_3PO_4$). Use is made of phosphoric acid with a 18 to 45 wt.% concentration of $P_2O_5$. The concentration of phosphoric acid depends on the method of its production in a given processing of phosphate ore. As a rule, in the disclosed method use is made of recycle phosphoric acid. It is known that the lower the concentration of phosphoric acid, the less is the solubility therein of rare-earth elements (Rt). It increases the degree of extracting rare-earth elements from ore. However, a small concentration of phosphoric acid adversely affects the degree of decomposition of phosphate ore, the intensity of its decomposition. Given high concentration of phosphoric acid, i.e., higher than 45 wt.% of $P_2O_5$, the solubility of rare-earth elements in the phosphoric acid solution increases to reduce the total amount of rare-earth elements extracted from the ore in the form of a concentrate of rare-earth elements.

Excess phosphoric acid is taken to form phosphate monocalcium - $Ca(H_2PO_4)_2$. The amount of phosphoric acid should exceed the stoichiometric one by, at least, three-fold and not more than five-fold. This depends on the solubility of calcium (Ca) in the phosphoric acid ($H_3PO_4$)/phosphate ore system. The minimal quantity of phosphoric acid is chosen relative to the solubility of calcium (Ca) in the system, namely, the system should be in a condition close to saturated as regards calcium (Ca). Should the amount of phosphoric acid surpass the stoichiometric one by more than three-fold, the degree of extracting rare-earth elements to the concentrate is decreased, because the total amount of dissolved rare-earth elements is increased, therefore, it is inexpedient that the acid be taken in an amount exceeding the stoichiometric one by more than five-fold.

The pulp in the reactor 1 is continuously mixed and heated, maintaining the temperature from 60 to 110°C to enhance the intensity of phosphate ore decomposition. The top limit of the temperature of hearing the pulp is limited by the chemical stability of the material in reactor 1.

The process of decomposition of the phosphate ore formed mostly by complex calcium phosphate $Ca_5F(PO_4)_3$ and containing the compounds of rare-earth elements in the form of a generalized formula $Rt_{10}F_3(PO_4)_9$, takes place by the reactions:

$$Ca_5F(PO_4)_3 + H_2O + H_3PO_4 \rightarrow Ca^{2+} + PO_4^{3-} + F^-$$
$$Rt_{10}F_3(PO_4)_9 + H_2O + H_3PO_4 \rightarrow Rt^{3+} + PO_4^{3-} + F^-$$

Phosphate ore is decomposed in phosphoric acid until a saturated solution of the pulp liquid phase as to calcium is obtained. In so doing, the solution is saturated, first, as to rare-earth elements, when from 30 to 40 wt.% of rare-earth elements, comprising the phosphate ore, is dissolved. Once the pulp liquid phase has reached the state of a saturated solution as to rare-earth elements, the compounds of calcium will continue to dissolve, inasmuch as their solubility in phosphoric acid is higher than the solubility therein of the compounds of rare-earth elements, comprising the original ore, approximately a hundred times, and the compounds of rare-earth elements will fall into the solution in the form of fine insoluble particles which will remain in the pulp in a suspended state.

Calcium phosphates will continue to dissolve until the pulp liquid phase is saturated with calcium (Ca), i.e., until a state close to equilibrium is achieved in the system, which should satisfy the condition:

$$\frac{\delta \gamma}{\delta \tau} = 2 - 0.5\%/\text{hour, where}$$

$$\gamma = (1 - M_1/M_2) \cdot 100\%,$$

$M_1$     is mass of solid sediment (kg)
$M_2$     is mass of original ore (kg)
$\tau$     is time (hour).

The attainment of a condition close to equilibrium in the system will depend on the time of decomposition of the raw material in the reactor 1, which is determined by the known method for the given system, i.e., for the given raw material and the mode of its decomposition in the reactor 1: the concentration of phosphoric acid, temperature, relationship $M_2/M_3$ (where $M_2$ is the mass of phosphate ore, $M_3$ is the mass of phosphoric acid).

When determining the time of the decomposition, the kinetics of phosphate ore dissolution is registered for the given mode as a relationship:

$$\gamma = f(\tau)$$

and the time of ore dissolution is chosen to satisfy the condition:

$$\frac{\delta \gamma}{\delta \tau} = 2 - 0.5\%/\text{hour.}$$

When $\frac{\delta \gamma}{\delta \tau} > 2\%/\text{hour}$, the time of dissolution of original ore is not more than one hour which is the minimal time required to decompose the ore.

With $\frac{\delta \gamma}{\delta \tau} < 0.5\%/\text{hour}$, the time of ore decomposition is about six hours, like in the known methods.

Following the ore decomposition, the liquid phase of the pulp formed is in a state close to saturated as to calcium (Ca), and with $\frac{\delta \gamma}{\delta \tau} < 5\%/\text{hour}$, the fine particles of the undecomposed original ore will continue to dissolve, and the coarse ones will serve as centres of crystallization of calcium phosphates, namely, phosphate dicalcium ($CaHPO_4$) or phosphate monocalcium [$Ca(H_2PO_4)_2$].

Thus, solid particles in the pulp will represent a polydispersed mass, whose particles' size differs substantially. Fine particles from 1 $\mu$m and less are undissolved compounds of rare-earth elements $Rt_{10}F_3$-($PO_4$)$_9$ or $9RtPO_4$, and larger ones, exceeding the size of fine particles ten times and more, represent the residue of undecomposed phosphate ore with the crystals of calcium phosphates formed on their surface.

Subsequent to the decomposition of original ore in the reactor 1, a solid sediment is separated from the pulp liquid phase. Separation of the pulp solid sediment from the liquid phase begins from the moment at which the size of particles reaches the value exceeding the size of particles containing mostly the compounds of rare-earth elements, at least, ten times. This moment coincides with that of attainment in the pulp of a state close to equilibrium, provided $\frac{\delta \gamma}{\delta \tau} < 5\%/\text{hour}$. The size of particles of fine and coarse fractions, when $\frac{\delta \gamma}{\delta \tau} = 2 - 5\%/\text{hour}$ may differ hundred times.

In the disclosed method of extracting rare-earth elements from phosphate ore during its processing in the production of phosphoric acid and/or phosphate fertilizer, the commercial concentrate of rare-earth elements is produced by dividing the solid sediment into a coarsely-dispersed and finely-dispersed fractions. The finely-dispersed fraction, whose particles are formed mostly by the compounds of rare-earth elements is a commercial concentrate of rare-earth elements.

The boundary size of particles, according to which the solid sediment is divided into a coarsely- and finely-dispersed fractions are chosen from 50 to 0.1 $\mu$m. This boundary size is chosen beforehand, depending on the desired content of rare-earth elements in the concentrate. The less the boundary size of particles by which the solid sediment is divided into fractions, the higher is the content of rare-earth elements in the finely-dispersed fraction. If the boundary size of particles is 50 $\mu$m, the content of rare-earth elements in the finely-dispersed fraction can range from 6 to 15 wt.% in terms of the oxides of rare-earth elements, depending on their content in the original ore. Given lesser boundary size, e.g., 1 $\mu$m, the content of rare-earth elements in the finely-dispersed fraction may reach 40 wt.% regardless of their content in original ore. However, this reduces the amount of rare-earth elements extracted from the individual mass of the original ore.

The solid sediment can be divided into a coarsely- and finely-dispersed fraction both simultaneously with the separation of the solid sediment from the pulp liquid phase, and following its separation from the liquid phase.

Any method can be used to divide the solid sediment into a coarsely- and finely-dispersed fractions, involving any known devices employed to divide solid particles into fractions, e.g., classifiers.

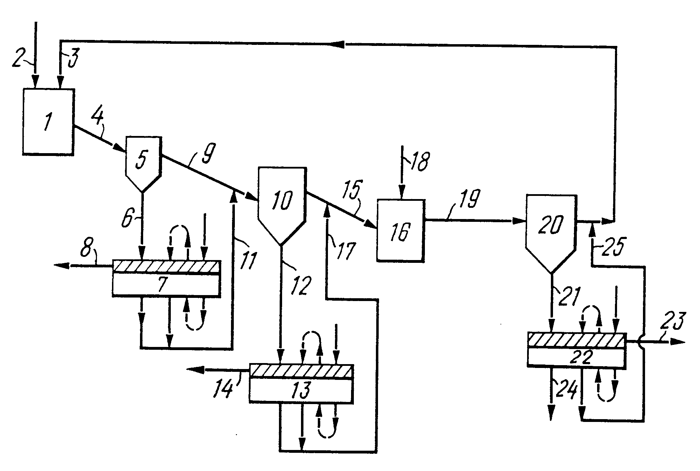

The accompanying drawing shows a method for extracting rare-earth elements from phosphate ores, in which the solid sediment is divided into fractions simultaneously with the separation of this sediment from the pulp liquid phase. The solid sediment is separated from the liquid phase of the pulp in two stages, namely, first, it is the particles of a coarsely-dispersed fraction that are separated which are formed mostly by the phosphate compounds of calcium, and then, the particles of the finely dispersed fraction containing mostly the compounds of rare-earth elements. From the reactor 1 the pulp is fed along a line 4 to a settler 5 to separate the particles of the coarsely-dispersed fraction. In the example under review the coarsely-dispersed fraction is separated in the settler 5 by way of sedimentation settling. However, the coarsely-dispersed fraction can be separated by any known method, e.g., with the aid of classification sieves whose cells' size corresponds to the boundary size by which the solid sediment is divided into fractions. Given sedimentation settling, the boundary size of particles according to which the solid sediment is divided into fractions depends mostly on the time of the pulp presence in the settler 5. This boundary size is chosen beforehand, whereupon, a desired time of pulp settling in determined during which all particles of the coarsely-dispersed fraction settle down on the bottom of the settler 5. For instance, for particles measuring 50 $\mu$m the time of settling is five minutes. In case of a continuous method of processing phosphate ores the time of pulp presence in the settler 5 is known to be assigned by its volume.

From the settler 5 the coarsely-dispersed fraction of the solid sediment is directed along a line 6 to a filter 7, where it is washed with water. The coarsely-dispersed fraction of the solid sediment, containing mostly calcium phosphates is removed from the filter 7 along a line 8. These calcium phosphates are mostly production wastes. However, they can be used as a phosphate fertilizer of prolonged action.

Subsequent to separation of the coarsely-dispersed fraction of the solid sediment from the pulp liquid phase, the pulp is directed along a line 9 to a thickener 10. Flushing water returns from the filter 7 along a line 11 to the line 9. In the thickener 10 the finely-dispersed fraction of the solid sediment, containing mostly phosphate compounds of rare-earth elements, is separated from the pulp liquid phase. The particles of the firmly-dispersed fraction are separated from the pulp liquid phase basically in the same manner as in the known method for extracting rare-earth elements from phosphate ore, using a flocculant designed to speed up settling the microparticles of the finely-dispersed fraction. Any known flocculant, e.g., polyacrylamide, can be used as a flocculant. The process of settling the particles of a finely-dispersed fraction occurs till the pulp is clarified. Given continuous method of processing phosphate ore, the quantity of flocculant and the volume of the thickener 10 are chosen so that the time of pulp presence in the thickener 10 does not exceed the time of decomposition of the original ore in the reactor 1. From the thickener 10 particles of the finely-dispersed fraction of the solid sediment are directed along a line 12 to a filter 13, where the sediment is flushed with water and removed from a line 14.

This finely-dispersed fraction of the solid sediment is a commercial concentrate of rare-earth elements, which is the phosphate compounds of rare-earth elements with their content of, at least, 6 wt.% in the concentrate in terms of oxides.

Thus, the disclosed method for extracting rare-earth elements from phosphate ore during its processing in the production of phosphoric acid and/or phosphate fertilizer enables one to quickly and readily obtain a commercial concentrate of rare-earth elements with insignificant expenses which are much lower than those associated with the production of a commercial concentrate of rare-earth elements using the known methods.

Thereupon, the processing is effected in keeping with an assigned technology until phosphoric acid is produced in the method under review using a sulphuric acid technique. Clarified liquid phase of the pulp, being a solution of phosphate monocalcium, is directed along a line 15 to a reactor 16. From the filter 13 the flushing water is returned to the line 15 along a line 17. Sulphuric acid of 98% concentration in an amount close to stoichiometric is fed to the reactor 16 to bind calcium (Ca) along a line 18.

As a result of the chemical reaction:

$$Ca(H_2PO_4)_2 \cdot H_2O + H_2SO_4 + nH_2O \rightarrow CaSO_4 \cdot mH_2O + H_3PO_4$$

there is formed a so-called phosphogypsum ($CaSO_4 \cdot mH_2O$) which is precipitated. From the reactor 16 the pulp is taken along a line 19 to a settler 20. From the settler 20 the pulp is fed along a line 21 to a filter 22, where phosphogypsum is separated from the commercial extraction phosphoric acid. Phosphogypsum is removed along a line 23, and extraction phosphoric acid - along a line 24. In this method a recycle extraction phosphoric acid is directed from the settler 20 to the reactor 1 along the line 3 to decompose subsequent batches of phosphate ore. Flushing waters are returned along a line 25 to the line 3.

The solution of recycle phosphoric acid is a saturated one as regards rare-earth elements, therefore, upon decomposition of subsequent batches of original ore, the lesser quantity of the compounds of rare-earth elements are dissolved in the pulp liquid phase.

Meanwhile, when using recycle extraction phosphoric acid containing sulphate-ions, their quantity in the solution of extraction phosphoric acid should not exceed 10% with respect to the mass of original ore.

This condition should be observed, because upon reacting with calcium (Ca) the sulphate-ions ($SO_3$) form the crystals of calcium sulphate ($CaSO_4$), the size of which is commensurate with that of the particles of the finely-dispersed fraction formed by the compounds of rare-earth elements.

The availability of particles in the finely-dispersed fraction which are formed by the crystals of calcium sulphate reduces the percentage content of rare-earth elements in the concentrate.

The invention will become more apparent by the description of specific exemplary embodiments of the disclosed method for extracting rare-earth elements from phosphate ore.

Example 1

1,000 kg of apatite concentrate of the Kola deposit were loaded into the reactor 1 of the following composition:

$P_2O_5$ - 39.4 wt.%; CaO - 50.8 wt.%; $Rt_2O_3$ - 0.88 wt.% together with 12,250 kg of phosphoric acid of 30 wt.% concentration, which exceeds four times the quantity of acid required in keeping with stoichiometric relation.

The mixture was heated to 90°C and stirred for two hours.

In the first settler 5 it was kept for 10 min to separate particles of the coarsely-dispersed fraction. Thereupon, the pulp was directed to the thickener 10 to separate particles of the finely-dispersed fraction. For this purpose, a flocculant, namely, a 10% aqueous solution of polyacrylamide in an amount of 10 kg, was introduced in the thickener 10.

The pulp was kept in the thickener 10 for one hour. Clarified pulp was removed to the reactor 16 and then the process was performed as in the known method.

The solid sediment of the particles of coarsely- and finely-dispersed fractions was analyzed. The content of rare-earth elements in the solid sediment was determined by the method of neutron activation and ICP-method.

The composition of coarsely-dispersed fraction particles is as follows:

CaO - 57.4 wt.%

$P_2O_5$ - 38.6 wt.%

$Rt_2O_3$ - 2.17 wt.%.

The weight of a coarsely-dispersed fraction sediment was 107 kg. The content of particles measuring 15 $\mu$m was not more than 5 wt.%.

The composition of finely-dispersed fraction particles measuring < 15 $\mu$m:

$Rt_2O_3$ - 15.04 wt.%

$P_2O_5$ - 20.2 wt.%

CaO - 9.8 wt.%.

The weight of a finely-dispersed fraction solid sediment was 14 kg, which accounted for 23.9 wt.% of its content in the original ore.

Examples 2 - 18 are given in Table 1.

In each example from 2 to 17 the method was accomplished mostly in the manner analogous in Example 1, except for the fact that recycle phosphoric acid was used in Examples 2, 6 - 12, 14 - 17, containing sulphate-ions ($SO_3$), and a classification sieve with 50 $\mu$m cells was used in Example 18 to separate coarsely- and finely-dispersed fractions. Besides, the solid sediment was separated from the pulp liquid phase in the thickener 10, and the sediment was divided into fractions following the separation of the

7

solid sediment from the pulp liquid phase.

Table 1

| No. | Phosphoric acid | | | Pulp heating temperature (°C) | Presence in settler (minutes) |
|-----|-----------------|---|---|---|---|
| | Concentration (wt.% $P_2O_5$) | Mass (kg) | Content of $SO_3$ (wt.% with respect to mass of ore) | | |
| 1 | 2 | 3 | 4 | 5 | 6 |
| 2 | 30 | 12,250 | 1.0 | 90 | 10 |
| 3 | 30 | 12,870 | 0.0 | 110 | 25 |
| 4 | 25 | 14,709 | 0.0 | 90 | 5 |
| 5 | 25 | 18,386 | 0.0 | 100 | 10 |
| 6 | 25 | 12,870 | 1.1 | 100 | 5 |
| 7 | 25 | 14,709 | 1.1 | 95 | 10 |
| 8 | 25 | 18,386 | 1.1 | 90 | 15 |
| 9 | 25 | 11,032 | 5.2 | 90 | 5 |
| 10 | 25 | 14,709 | 5.2 | 95 | 10 |
| 11 | 25 | 18,386 | 5.2 | 90 | 10 |
| 12 | 25 | 12,870 | 10.0 | 100 | 10 |
| 13 | 18 | 17,770 | 0.0 | 100 | 25 |
| 14 | 18 | 20,429 | 5.0 | 90 | 10 |
| 15 | 18 | 25,536 | 10.0 | 95 | 25 |
| 16 | 45 | 7,150 | 5.0 | 60 | 10 |
| 17 | 45 | 8,172 | 1.1 | 90 | 15 |
| 18 | 25 | 14,709 | 0.0 | 90 | -- |

Table 1 (cont.)

| No. | Coarsely-dispersed fraction | | Finely-dispersed fraction | | |
|---|---|---|---|---|---|
| | Mass (kg) | Content of $Rt_2O_3$ (wt.%) | Mass (kg) | Content of $Rt_2O_3$ (wt.%) | Yield (% of the content in original ore) |
| 7 | 8 | 9 | 10 | 11 | 12 |
| 2 | 112 | 2.48 | 14.8 | 23.3 | 39.2 |
| 3 | 122.5 | 2.50 | 8.5 | 41.2 | 39.8 |
| 4 | 111.1 | 2.21 | 17.1 | 22.6 | 44.0 |
| 5 | 75.2 | 3.60 | 13.8 | 19.7 | 30.9 |
| 6 | 114.0 | 2.01 | 18.7 | 22.1 | 47.0 |
| 7 | 113.9 | 2.49 | 15.1 | 23.4 | 40.1 |
| 8 | 75.8 | 3.60 | 12.7 | 20.4 | 29.4 |
| 9 | 328.7 | 1.22 | 30.3 | 8.9 | 30.6 |
| 10 | 145.3 | 2.05 | 22.5 | 15.8 | 39.5 |
| 11 | 89.9 | 5.30 | 16.8 | 14.8 | 28.2 |
| 12 | 155.8 | 2.18 | 49.7 | 6.2 | 35.0 |
| 13 | 145.8 | 2.06 | 8.45 | 43.3 | 41.6 |
| 14 | 162.5 | 1.81 | 17.7 | 30.2 | 40.6 |
| 15 | 119.6 | 30.07 | 31.4 | 6.4 | 22.8 |
| 16 | 172.8 | 1.33 | 16.2 | 10.7 | 19.7 |
| 17 | 147.7 | 1.85 | 8.72 | 21.2 | 21.0 |
| 18 | 111.8 | 2.19 | 16.9 | 23.1 | 41.8 |

Industrial Applicability

The method, according to the invention, for extracting rare-earth elements from phosphate ore can be used to advantage in the technological process of producing phosphoric acid mostly in the production of phosphate fertilizer through sulphuric acid or phosphoric acid decomposition of phosphate ore: apatites, phosphorites of different deposits with the content of rare-earth elements, at least, 0.1 wt.%. This method can also be used in the technological process of direct provision of phosphate fertilizer, e.g., ammophosphate, from phosphate ores.

Claims

1. A method for extracting rare-earth elements from phosphate ore during its processing in the production of phosphoric acid and/or phosphate fertilizer, comprising mixing ground phosphate ore with phosphoric acid, which is taken in excess amount to form phosphate monocalcium $Ca(H_2PO_4)_2$, and decomposing said phosphate ore as it is heated to reach the state of liquid pulp close to equilibrium as regards calcium solubility, whereupon, a solid sediment is separated from the pulp liquid phase, said sediment containing compounds of calcium and rare-earth elements, **characterized** in that separation of the pulp solid sediment from the liquid phase begins from the moment at which the size of particles formed mostly by calcium phosphate compounds reaches the value, at least, exceeding ten times the size of particles containing mostly phosphate compounds of rare-earth elements, in so doing, the solid sediment is divided into a coarsely-dispersed fraction formed mostly by compounds of calcium, and finely-dispersed fraction formed mostly by compounds of rare-earth elements.

2. A method for extracting rare-earth elements from phosphate ore, as claimed in claim 1, **characterized** in that the boundary size of particles, according to which the solid sediment is divided into coarsely-and finely-dispersed fractions, is chosen within 50 to 0.1 $\mu$m.

3. A method for extracting rare-earth elements from phosphate ore, as claimed in claim 1, **characterized** in that the solid sediment is divided into coarsely- and finely-dispersed fractions simultaneously with the separation of the solid sediment from the pulp liquid phase, first separating the coarsely-dispersed fraction and then the finely-dispersed one.

4. A method for extracting rare-earth elements from phosphate ore, as claimed in claim 1 or 2, **characterized** in that the solid sediment is divided into a coarsely-dispersed and finely-dispersed fractions after separating the solid sediment from the pulp liquid phase.

5. A method for extracting rare-earth elements from phosphate ore, as claimed in any of claims from 1 to 4, **characterized** in that the coarsely-dispersed fraction particles are separated by way of sedimentation settling.

6. A method for extracting rare-earth elements from phosphate ore, as claimed in any of claims from 2 to 4, **characterized** in that the sediment is divided into a coarsely-dispersed and finely-dispersed fractions with the aid of classification sieves, with the size of cells corresponding to the boundary size of particles according to which the solid sediment is divided into a coarsely- and finely-dispersed fractions.

7. A method for extracting rare-earth elements from phosphate ore, as claimed in any of claims form 1 to 6, **characterized** in that when a recycle phosphoric acid is used, the content of sulphate-ions ($SO_3$) in the pulp, forming a solid compound ($CaSO_4$) together with calcium (Ca), the size of particles of which are commensurate with that of the particles of finely-dispersed fraction, is set to account for not more than 10 wt.% of the mass of phosphate ore.

European Patent
Office

**EUROPEAN SEARCH REPORT**

Application Number

EP    92 10 2907

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | EP-A-0 054 993 (STAMICARBON B.V.)<br>* page 1, line 1 - line 8 *<br>* page 2, line 11 - page 3, line 28 *<br>* page 4, line 27 - line 36 *<br>* page 6, line 1 - line 32 *<br>* claims 1,2; figure 1 *<br>--- | 1,7 | C01F17/00<br>C22B59/00<br>C01B25/225 |
| A | DATABASE WPIL<br>Week 9207,<br>Derwent Publications Ltd., London, GB;<br>AN 92-055377/07<br>& SU-A-1 636 337 (MOSCOW FINE CHEM TECH)<br>23 March 1991<br>* abstract *<br>--- | 1 | |
| A | DATABASE WPIL<br>Week 8232,<br>Derwent Publications Ltd., London, GB;<br>AN 82-67772/32<br>& SU-A-872 454 (LENINGRAD LENSOVET TECH)<br>15 October 1981<br>* abstract *<br>--- | 1 | TECHNICAL FIELDS SEARCHED (Int. Cl.5 ) |
| A | CHEMICAL ABSTRACTS, vol. 114,<br>28 January  1991, Columbus, Ohio, US;<br>abstract no. 26684y,<br>I.V.MELIKHOV ET AL. 'Phosphoric acid manufacture from rare-earth containing apatite concentrates'<br>* abstract * | 1 | C22B<br>C01F |
| A | & SU-A-1 595 793 (LENINGRAD STATE SCIENTIFIC RESEARCH INSTITUE OF THE BASIC CHEMICAL IND)<br><br>----- | 1 | |

The present search report has been drawn up for all claims

| Place of search | Date of completion of the search | Examiner |
|---|---|---|
| THE HAGUE | 08 OCTOBER 1992 | VAN DER POEL W. |

EPO FORM 1503 03.82 (P0401)